# FASCICULE DE BREVET EUROPEEN

(11) **EP 2 053 222 B1**
(45) Date de publication et mention de la délivrance du brevet: **05.05.2010**
(21) Numéro de dépôt: 08166861.8
(22) Date de dépôt: 17.10.2008
(51) Int. Cl.: F02D 41/06, F02D 41/30, F02D 41/00

(54) **Procède de démarrage a froid d'un moteur a combustion interne**
Verfahren zum Kaltstart eines Verbrennungsmotors
Method of cold-starting an internal combustion engine

(30) Priorité: 23.10.2007 FR 0758479
(43) Date de publication de la demande: 29.04.2009
(73) Titulaire: PEUGEOT CITROËN AUTOMOBILES S.A., 78140 Vélizy Villacoublay (FR)
(72) Inventeur: Gehin, Jean-Marc, 90110 Romagny sous Rougemont (FR); Pelletier, Vincent, 76290 Fontaine la Mallet (FR)
(74) Mandataire: Ménès, Catherine

(56) Documents cités:
- EP-A- 1 801 394
- DE-A1- 10 063 677
- DE-A1- 10 143 509
- US-A- 5 542 394
- US-A1- 2003 205 217

## Description

L'invention concerne un procédé de démarrage à froid d'un moteur à combustion interne pour véhicule automobile. De façon générale, l'invention vise à réduire les émissions polluantes à la source, des moteurs à essence.

La qualité du carburant utilisé pour les véhicules est très variable, notamment en fonction de la zone géographique où circule le véhicule. Une propriété physique du carburant particulièrement variable est sa capacité à se vaporiser. Cette capacité est bien connue dans la littérature anglo-saxonne sous l'acronyme PVR pour Pression Vapeur Raid. Cet acronyme sera utilisé dans la suite de la description de l'invention. Pour les carburants se vaporisant bien, on parle de carburant HPVR (Haut PVR) et pour les carburants se vaporisant mal, on parle de carburant BPVR (Bas PVR).

, Pour pouvoir démarrer correctement, un moteur à essence a besoin d'avoir un mélange d'air et d'essence proche d'un mélange stoechiométrique. Cela suppose que la quantité de carburant sous forme gazeuse soit bien maîtrisée. Or, selon la PVR du carburant, la quantité de carburant sous forme gazeuse participant à la combustion au démarrage à froid et à la mise en action du moteur varie énormément pour une même quantité de carburant injectée.

Afin de garantir une quantité de carburant sous forme gazeuse suffisante pour réaliser de bonnes combustions au démarrage et à la mise en action du moteur, les calibrations sont réalisés avec un carburant représentatif d'un carburant de type BPVR. Ensuite, des vérifications sont réalisées pour s'assurer que lorsque l'on utilise un carburant HPVR, les quantités injectées ne sont pas trop grandes et ne risquent pas d'empêcher la combustion par un excès d'essence sous forme vapeur. Le mélange ne serait alors pas inflammable.

Le réglage est donc unique quel que soit le carburant. En conséquence, lorsque l'on utilise un carburant HPVR, la quantité de carburant sous forme vapeur est en excès lors du démarrage et la mise en action du moteur. Cet excès ne participe pas à la combustion et se retrouve à l'échappement du moteur sous formes d'hydrocarbures imbrûlés (HC). Ceci a un impact direct sur les émissions polluantes du moteur. Lorsque le véhicule est équipé d'un catalyseur, celui-ci n'est pas amorcé à froid et les hydrocarbures imbrûlés s'échappent dans l'atmosphère.

Lors de démarrage pas grand froid, lorsque la température ambiante est en dessous de 15°C, l'excès de carburant sous forme vapeur crée également des fumées noires à l'échappement.

On a tenté de résoudre ce problème en adaptant la quantité de carburant injectée dans un cylindre du moteur lors des phases de démarrage en fonction de la capacité du carburant à se vaporiser. La mesure directe de cette capacité étant difficile à réaliser à bord du véhicule, la capacité du carburant à se vaporiser a été estimée en fonction d'une chute de régime du moteur lors d'une réduction de quantité de carburant injecté intervenant après le démarrage du moteur. La réduction de la quantité de carburant injecté étant calibrée, la chute du régime moteur donne une information représentative de la capacité du carburant à se vaporiser. On peut calibrer cette chute en fonction de différents types de carburants ayant différentes capacités à ce vaporiser.

Une autre méthode consiste à mesurer le temps nécessaire au démarreur pour lancer le moteur. Cette durée peut être calibrée en fonction de différents types de carburants.

Ces deux méthodes améliorent l'adaptation de la quantité de carburant injecté dans le moteur lors d'une opération de démarrage intervenant après l'estimation de la capacité du carburant à se vaporiser.

Ce type de méthode, enregistrant la qualité d'un carburant fonctionne relativement bien lors de démarrages à froid successifs. En revanche ce type de méthode est mis en défaut après un remplissage du réservoir suivi d'un démarrage du moteur dont la température d'eau est supérieure à 60°C. Cette situation est courante lorsque le véhicule dont le moteur est chaud s'arrête pour remplir son réservoir puis repart aussitôt.

Ce type de méthode n'est pas capable d'évaluer la qualité du carburant utilisée pour remplir le réservoir. Cette incapacité à estimer le type de carburant dans le réservoir en démarrage moteur chaud associé à un remplissage du réservoir entraîne un risque important de fonctionnement dégradé pendant les démarrages qui suivent un remplissage de réservoir.

L'invention vise à palier ce problème en proposant d'estimer la capacité à se vaporiser du carburant présent dans le réservoir.

A cet effet, l'invention a pour objet un procédé de démarrage d'un moteur à combustion interne d'un véhicule comprenant un réservoir de carburant pour le moteur, des moyens pour mesurer une quantité de carburant dans le réservoir et des moyens pour adapter, lors d'un démarrage du moteur, une quantité de carburant injectée dans un cylindre du moteur en fonction d'une capacité à se vaporiser du carburant, caractérisé en ce qu'après un remplissage du réservoir en carburant, on estime une capacité à se vaporiser du carburant présent dans le réservoir en fonction d'une capacité à se vaporiser du carburant avant remplissage et d'une capacité à se vaporiser d'un carburant de référence et en que la capacité à se vaporiser du carburant présent dans le réservoir est utilisée pour un démarrage du moteur postérieur au remplissage du réservoir.

Après un remplissage du réservoir en carburant, la capacité à se vaporiser du carburant présent dans le réservoir peut être fonction des quantités de carburant présentes dans le réservoir avant et après remplissage.

La capacité à se vaporiser du carburant présent dans le réservoir peut être égale au barycentre de la capacité à se vaporiser du carburant avant remplissage, affectée d'un poids égal à la quantité de carburant présent dans le réservoir avant remplissage et de la capacité à se vaporiser d'un carburant de référence affectée d'un poids égal la quantité de carburant ajoutée lors du remplissage.

D'autres paramètres peuvent être pris en compte pour l'estimation de la capacité à se vaporiser du carburant présent dans le réservoir. Cette capacité à se vaporiser peut être fonction d'une température mesurée du moteur. Cette température est par exemple la température d'un fluide de refroidissement du moteur. Une telle température est couramment mesurée dans un moteur pour des raisons de sécurité du moteur. Il n'est donc pas nécessaire de prévoir un capteur de température supplémentaire pour l'estimation de la capacité à se vaporiser du carburant présent dans le réservoir. On peut par exemple augmenter la valeur de l'estimation de la capacité à se vaporiser du carburant présent dans le réservoir lorsque la valeur de la température mesurée du moteur baisse et abaisser la valeur de l'estimation de la capacité à se vaporiser du carburant présent dans le réservoir lorsque la valeur de la température mesurée du moteur augmente. En effet, par grand froid, un risque de non-démarrage du moteur existe et pour pallier ce risque, on agumente la valeur de l'estimation de la capacité à se vaporiser du carburant présent dans le réservoir, ce qui tend à injecter plus de carburant dans les cylindres du moteur au démarrage. En revanche, lorsque la température augmente, ce risque diminue et on peut abaisser la valeur de l'estimation de la capacité à se vaporiser du carburant présent dans le réservoir.

Avantageusement, tant que le carburant situé entre le réservoir et le moteur n'a pas été entièrement consommé par le moteur, on utilise pour un démarrage postérieur au remplissage du réservoir la capacité à se vaporiser du carburant avant remplissage.

Avantageusement, la capacité à se vaporiser du carburant présent dans le réservoir est utilisée pour un démarrage du moteur postérieur au remplissage du réservoir jusqu'à ce qu'une nouvelle capacité à se vaporiser du carburant puisse être mesurée.

L'invention sera mieux comprise et d'autres avantages apparaîtront à la lecture de la description détaillée d'un mode de réalisation donné à titre d'exemple, description illustrée par le dessin joint dans lequel :

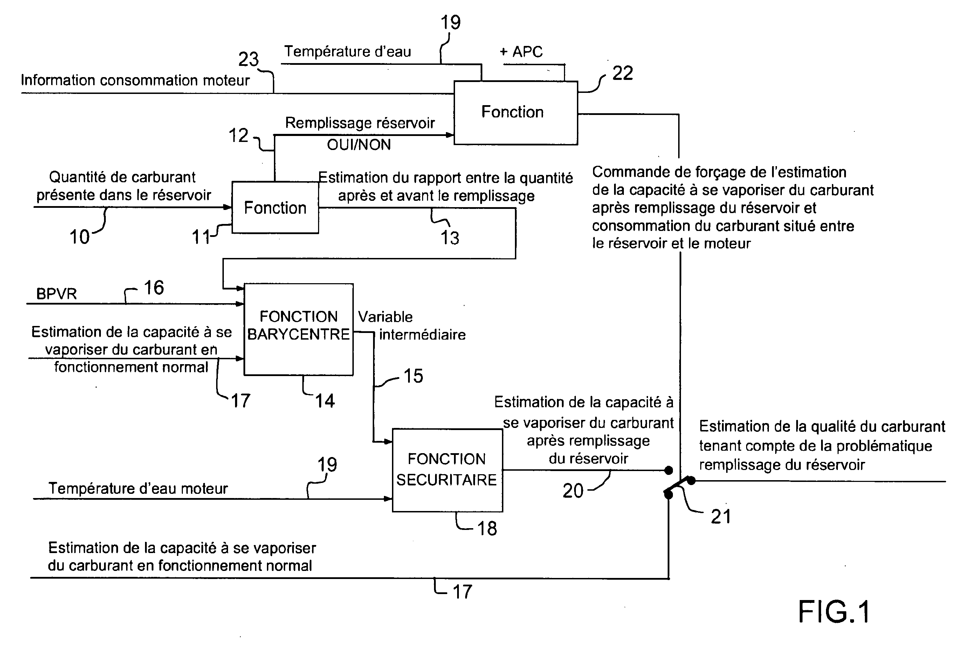

la figure 1 représente sous forme d'un bloc diagramme, différentes étapes d'un procédé conforme à l'invention.

La figure 1 illustre un procédé permettant d'estimer une capacité d'un carburant à se vaporiser. Cette capacité est utilisée pour définir la quantité de carburant à injecter lors d'un démarrage d'un moteur à combustion interne équipant un véhicule automobile. Le carburant est contenu dans un réservoir du véhicule. Une jauge permet de mesurer une quantité 10 de carburant présente dans le réservoir. Le remplissage du réservoir se fait moteur arrêté. Au cadre 11, on détermine si le réservoir a été rempli après redémarrage du moteur. Cette détermination peut se faire en comparant deux mesures de quantité de carburant effectuées par la jauge, l'une avant arrêt du moteur et l'autre après redémarrage du moteur. On peut disposer d'une information binaire 12 définissant si oui ou non le réservoir a été rempli ainsi que d'une information quantitative 13 sur un rapport entre la quantité de carburant présente dans le réservoir après remplissage et la quantité de carburant présente avant le remplissage. Le rapport 13 est utilisé au cadre 14 pour déterminer une capacité à se vaporiser 15 du carburant présent dans le réservoir après remplissage.

Il est difficile de connaître la capacité à se vaporiser du carburant que l'on a ajouté dans le réservoir. On peut définir un carburant de référence, par exemple un carburant BPVR, et utiliser sa valeur 16 de capacité à se vaporiser pour définir la capacité à se vaporiser 15. Cette capacité peut être définie en testant plusieurs quantités de carburant ajoutées lors du remplissage du réservoir afin de définir la meilleure valeur possible de capacité à se vaporiser 15. En d'autres termes, on définit une cartographie de la capacité à se vaporiser la plus probable en fonction des quantités de carburant présentes dans le réservoir avant et après remplissage du réservoir.

La capacité à se vaporiser 15 peut également être définie comme le barycentre d'une capacité à se vaporiser 17 du carburant définie avant remplissage et affectée d'un poids égal à une quantité de carburant présent dans le réservoir avant remplissage et de la capacité à se vaporiser 16 d'un carburant de référence affectée d'un poids égal la quantité de carburant ajoutée lors du remplissage. Ce calcul barycentrique, représenté au cadre 14, est simple à mettre en oeuvre à partir de mesures déjà faites à bord du véhicule. Les quantités de carburant sont mesurées par la jauge à carburant et la capacité à se vaporiser 17 est par exemple définie à l'aide d'une chute du régime moteur observée ou du temps nécessaire à un démarreur du véhicule pour lancer le moteur lors d'un démarrage antérieur réalisé avec le carburant présent dans le réservoir avant remplissage du réservoir. La capacité à se vaporiser 17 est mémorisée dans une mémoire non volatile et sera utilisée tant qu'une nouvelle capacité à se vaporiser n'est pas définie pour le carburant présent dans le réservoir après remplissage.

De plus, on peut utiliser la capacité à se vaporiser 15 comme variable intermédiaire que l'on adapte à l'aide d'une fonction sécuritaire définie au cadre 18. Cette fonction tient compte d'une température 19 mesurée dans le moteur. On choisit par exemple la température d'un fluide de refroidissement du moteur. Cette température est couramment mesurée dans la plupart des moteurs à combustion interne. Il n'est donc pas nécessaire d'ajouter un capteur supplémentaire pour réaliser cette mesure de température pour les besoins de la fonction sécuritaire. La fonction sécuritaire délivre une estimation 20. Cette estimation 20 est une estimation de la capacité à se vaporiser du carburant la plus sécuritaire à utiliser sur le démarrage qui suit un remplissage réservoir, elle correspond à un choix entre les estimations de la capacité à se vaporiser du carburant plausible que l'on peut avoir dans le réservoir de la capacité à se vaporiser du carburant après remplissage du réservoir.

La fonction sécuritaire 18 peut être définie en testant le démarrage du moteur à différentes température 19 mesurée dans le moteur. Par exemple, à des températures 19 très basses, de l'ordre de -30°C, une estimation trop haute de la capacité à se vaporiser du carburant présent dans le réservoir après remplissage du réservoir risque d'entraîner le non-démarrage du moteur. A ces basses température, la fonction sécuritaire 18 sera calibrée pour abaisser l'estimation de la capacité à se vaporiser du carburant présent dans le réservoir vers une capacité à se vaporiser représentative d'un carburant BPVR afin d'être certain de réaliser le démarrage.

En revanche, lorsque la température 19 est plus élevée, par exemple de l'ordre de +20°C, le risque de non-démarrage est moindre qu'aux basses températures. On peut donc calibrer la fonction sécuritaire 18 pour augmenter l'estimation de la capacité à se vaporiser du carburant présent dans le réservoir vers une capacité à se vaporiser représentative d'un carburant HPVR afin de limiter l'émission de polluants à l'échappement du moteur.

Il est possible de lier la fonction sécuritaire 18 et la fonction barycentrique 14 afin de limiter la correction appliquée par la fonction sécuritaire 18 en fonction de la quantité de carburant ajoutée lors remplissage du réservoir.

L'estimation 20 est utilisée pour les prochains démarrages du véhicule tant que le carburant situé entre le réservoir et le moteur n'a pas été entièrement consommé par le moteur. Cette condition est symbolisée sur la figure 1 par un interrupteur 21 qui permet de choisir entre l'estimation 20 et la capacité à se vaporiser 17 du carburant en fonctionnement normal précédemment mémorisée. Le choix réalisé par l'interrupteur 21 est symbolisé au cadre 22. Ce choix est fonction de l'information 12 définissant si le réservoir a été rempli, d'une information 23 sur la consommation en carburant du moteur, de la température 19 du fluide de refroidissement du moteur et d'une position d'une clé de contact du moteur. L'information 23 permet de définir quand le carburant situé entre le réservoir et le moteur a été entièrement consommé par le moteur.

## Revendications

1. Procédé de démarrage d'un moteur à combustion interne d'un véhicule comprenant un réservoir de carburant pour le moteur, des moyens pour mesurer une quantité (10) de carburant dans le réservoir et des moyens pour adapter, lors d'un démarrage du moteur, une quantité de carburant injectée dans un cylindre du moteur en fonction d'une capacité à se vaporiser (17) du carburant, dont après un remplissage du réservoir en carburant, on estime une capacité à se vaporiser (20) du carburant présent dans le réservoir par une première étape où une première capacité à se vaporiser (15) est déduite de la capacité à se vaporiser (17) du carburant avant remplissage et d'une capacité à se vaporiser (16) d'un carburant de référence **caractérisé par** une seconde étape où ladite première capacité (15) est adaptée à la hausse ou à la baisse par une fonction sécuritaire qui tient compte de la température (19) mesurée dans le moteur pour fournir l'estimation de la capacité à se vaporiser (20) du carburant présent dans le réservoir après le remplissage et en que la capacité à se vaporiser (20) du carburant présent dans le réservoir après le remplissage est utilisée pour un démarrage du moteur postérieur au remplissage du réservoir.

2. Procédé selon la revendication 1, **caractérisé en ce qu'**après un remplissage du réservoir en carburant, la première capacité à se vaporiser (15) est fonction des quantités (10) de carburant présentes dans le réservoir avant et après remplissage.

3. Procédé selon la revendication 2, **caractérisé en ce que** la première capacité à se vaporiser (15) est égale au barycentre de la capacité à se vaporiser (17) du carburant avant remplissage, affectée d'un poids égal à la quantité de carburant présent dans le réservoir avant remplissage et de la capacité à se vaporiser (16) d'un carburant de référence affectée d'un poids égal la quantité de carburant ajoutée lors du remplissage.

4. Procédé selon la revendication 1, **caractérisé en ce que** la première capacité à se vaporiser (15) est fonction de la seule capacité à se vaporiser (16) d'un carburant de référence.

5. Procédé selon l'une quelconque des revendications précédentes, **caractérisé en ce que** la température (19) mesurée est celle d'un fluide de refroidissement du moteur.

6. Procédé selon l'une quelconque des revendications précédentes, **caractérisé en ce que** ladite fonction sécuritaire consiste à augmenter la valeur de la première capacité à se vaporiser (15) lorsque la valeur de la température (19) baisse.

7. Procédé selon l'une quelconque des revendications précédentes, **caractérisé en ce que** ladite fonction sécuritaire consiste à abaisser la valeur de la première capacité à se vaporiser (15) lorsque la valeur de la température (19) augmente.

8. Procédé selon l'une des revendications précédentes, **caractérisé en ce que** tant que le carburant situé entre le réservoir et le moteur n'a pas été entièrement consommé par le moteur, on utilise pour un démarrage postérieur au remplissage du réservoir la capacité à se vaporiser (17) du carburant avant remplissage.

9. Procédé selon l'une des revendications précédentes, **caractérisé en ce que** la capacité à se vaporiser (20) du carburant présent dans le réservoir est utilisée pour un démarrage du moteur postérieur au remplissage du réservoir jusqu'à ce qu'une nouvelle capacité à se vaporiser (17) du carburant puisse être mesurée.

## Claims

1. A method for starting an internal combustion engine of a vehicle, comprising a fuel tank for the engine, means for measuring a quantity (10) of fuel in the tank, and means for adjusting a quantity of fuel injected into a cylinder of the engine when the engine is started depending on the volatility (17) of the fuel, of which a volatility (20) of the fuel present in the tank after the fuel tank has been filled is estimated in a first step in which a first volatility (15) is deduced from the volatility (17) of the fuel before the tank is filled and from a volatility (16) of a reference fuel,
**characterized by**
a second step in which the first volatility (15) is adjusted to the increase or reduction by a safety function that takes into account the temperature (19) measured in the engine to yield the estimate of volatility (20) of the fuel present in the tank after filling, and in that the volatility (20) of the fuel present in the tank after filling is used for starting the engine after the tank has been filled.

2. The method as recited in claim 1,
**characterized in that**
after the fuel tank has been filled, the first volatility (15) is a function of quantities (10) of the fuel present in the tank before and after filling.

3. The method as recited in claim 2,
**characterized in that**
the first volatility (15) is equal to the barycentre of the volatility (17) of the fuel before filling, to which is allotted a weight equal to the quantity of fuel present in the tank before filling, and of the volatility (16) of a reference fuel, to which is allotted a weight equal to the quantity of fuel that is added during filling.

4. The method as recited in claim 1,
**characterized in that**
first volatility (15) is a function of the unique volatility (16) of a reference fuel.

5. The method as recited in any of the preceding claims,
**characterized in that**
the measured temperature (19) is that of a coolant fluid of the engine.

6. The method as recited in any of the preceding claims,
**characterized in that**
the safety function consists in increasing the value of the first volatility (15) when the value of the temperature (19) falls.

7. The method as recited in any of the preceding claims,
**characterized in that**
the safety function consists in lowering the value of the first volatility (15) when the value of the temperature (19) rises.

8. The method as recited in any of the preceding claims,
**characterized in that**
while the fuel located between the tank and the engine has not been completely consumed by the engine, the volatility (17) of the fuel before filling is used for starting the engine after the tank has been filled.

9. The method as recited in any of the preceding claims,
**characterized in that**
the volatility (20) of the fuel present in the tank is used for starting the engine after the tank has been filled until a new volatility (17) of the fuel can be measured.

## Patentansprüche

1. Verfahren zum Starten eines Verbrennungsmotors eines Fahrzeugs, das einen Kraftstofftank für den Motor, Mittel zum Messen einer Kraftstoffmenge (10) in dem Tank und Mittel aufweist, um beim Starten des Motors eine Kraftstoffmenge anzupassen, die in einen Zylinder des Motors in Abhängigkeit von einer Verdampfungskapazität (17) des Kraftstoffs eingespritzt wird, für den man nach einem Betanken des Tanks mit Kraftstoff eine Verdampfungskapazität (20) des Kraftstoffs, der in dem Tank vorhanden ist, durch einen ersten Schritt schätzt, bei dem eine erste Verdampfungskapazität (15), von der Verdampfungskapazität (17) des Kraftstoffs vor dem Betanken und einer Verdampfungskapazität (16) eines Bezugskraftstoffs abgeleitet wird, **gekennzeichnet durch** einen zweiten Schritt, bei dem die erste Verdampfungskapazität (15) an das Zunehmen oder Sinken durch eine Sicherheitsfunktion angepasst wird, die die Temperatur (19) berücksichtigt, die in dem Motor gemessen wird, um die Schätzung der Verdampfungskapazität (20) des Kraftstoffs, der in dem Tank nach dem Betanken vorhanden ist, zu liefern, und dass die Verdampfungskapazität (20) des Kraftstoffs, der in dem Tank nach dem Betanken vorhanden ist, für ein Starten des Motors nach dem Betanken des Tanks verwendet wird.

2. Verfahren nach Anspruch 1, **dadurch gekennzeichnet, dass** die erste Verdampfungskapazität (15) nach einem Betanken des Kraftstofftanks von den Kraftstoffmengen (10), die in dem Tank vor und nach dem Betanken vorhanden sind, abhängt.

3. Verfahren nach Anspruch 2, **dadurch gekennzeichnet, dass** die erste Verdampfungskapazität (15) gleich dem Massenmittelpunkt der Verdampfungskapazität (17) des Kraftstoffs vor dem Betanken ist, verbunden mit einem Gewicht gleich der Kraftstoffmenge, die in dem Tank vor dem Betanken vorhanden ist, und der Verdampfungskapazität (16) eines Bezugskraftstoffs mit einem Gewicht gleich der Kraftstoffmenge, die beim Betanken hinzugefügt wird.

4. Verfahren nach Anspruch 1, **dadurch gekennzeichnet, dass** die erste Verdampfungskapazität (15) allein von der Verdampfungskapazität (16) eines Bezugskraftstoffs abhängt.

5. Verfahren nach einem der vorhergehenden Ansprüche, **dadurch gekennzeichnet, dass** die gemessene Temperatur (19) die eines Kühlfluids des Motors ist.

6. Verfahren nach einem der vorhergehenden Ansprüche, **dadurch gekennzeichnet, dass** die Sicherheitsfunktion darin besteht, den Wert der ersten Verdampfungskapazität (15) zu erhöhen, wenn der Wert der Temperatur (19) sinkt.

7. Verfahren nach einem der vorhergehenden Ansprüche, **dadurch gekennzeichnet, dass** die Sicherheitsfunktion darin besteht, den Wert der ersten Verdampfungskapazität (15) zu senken, wenn der Temperaturwert (19) steigt.

8. Verfahren nach einem der vorhergehenden Ansprüche, **dadurch gekennzeichnet, dass** man, solange der Kraftstoff, der sich zwischen dem Tank und dem Motor befindet, vom Motor nicht komplett aufgebraucht wurde, für ein Starten nach dem Betanken des Tanks die Verdampfungskapazität (17) des Kraftstoffs vor dem Betanken verwendet.

9. Verfahren nach einem der vorhergehenden Ansprüche, **dadurch gekennzeichnet, dass** die Verdampfungskapazität (20) des Kraftstoffs, der in dem Tank vorhanden ist, zu einem Starten des Motors nach dem Betanken des Tanks verwendet wird, bis eine neue Verdampfungskapazität (17) des Kraftstoffs gemessen werden kann.
